# EUROPEAN PATENT APPLICATION

(11) **EP 4 730 097 A1**
(43) Date of publication of application: **22.04.2026**
(21) Application number: 25201542.5
(22) Date of filing: 11.09.2025
(51) Int. Cl.: G06F 3/06, G06F 12/02

(54) **NETWORK INTERFACE DEVICE-BASED MEMORY ACCESS TO REDUCE WRITE AMPLIFICATION FACTOR AND PROVIDE ATTESTATION**

(30) Priority: 15.10.2024 US 202418915574
(71) Applicant: INTEL Corporation, Santa Clara, CA 95054 (US)
(72) Inventor: BIEDERMAN, Daniel, Saratoga, CA, 95070 (US); LI, Yadong, Portland, OR, 97229 (US); KOKA, Hemant, Lathrop, CA, 95330 (US); ELLIS, Jackson, Fort Collins, CO, 80528 (US); JOHNSON, Salma, Littleton, MA, 01460 (US)
(74) Representative: Rummler, Felix

(57) **Abstract**

An apparatus is disclosed that includes a network interface device comprising processors to implement network interface device functionality and communication protocol engine circuitry, wherein the network interface device is to: receive a request to write data to a memory node communicably coupled to the network interface device; identify network information corresponding to the request, wherein the network information includes at least one of quality of service (QoS), physical function (PF), virtual function (VF), name space identifier (NSID), flow ID, service level objectives (SLOs), or process address space ID (PASID); identify characteristics of the memory node, wherein the characteristics include at least page size of the memory node; and cause the data to be coalesced with other data on the memory node based on the network information and the characteristics.

## Description

### BACKGROUND OF THE DISCLOSURE

In highly virtualized environments, significant amounts of server resources are expended processing tasks that are beyond user applications. Such processing tasks can include hypervisors, container engines, network and storage functions, security, and large amounts of network traffic. To address these various processing tasks, advanced network interface devices with hardened accelerators and network connectivity have been introduced. These advanced network interface devices are referred to as infrastructure processing units (IPUs), data processing units (DPUs), programmable network devices, and so on. The advanced network interface devices can accelerate and manage infrastructure functions using dedicated and programmable cores deployed in the devices. The advanced network interface devices can provide for infrastructure offload and an extra layer of security by serving as a control point of the host for running infrastructure applications. By using an advanced network interface devices, the overhead associated with running infrastructure tasks can be offloaded from a server device.

### BRIEF DESCRIPTION OF THE DRAWINGS

Embodiments described herein are illustrated by way of example and not limitation in the figures of the accompanying drawings in which like references indicate similar elements, and in which:
**FIG. 1** is a block diagram illustrating a computer system configured to implement one or more aspects of the embodiments described herein;
**FIG. 2** is a block diagram of a system that includes selected components of a datacenter;
**FIG. 3** is a block diagram of a portion of a datacenter, according to one or more examples of the present specification;
**FIG. 4** illustrates a forwarding element that includes a control plane and a programmable data plane;
**FIG. 5** depicts an example network interface device;
**FIG. 6** is a block diagram illustrating a programmable network interface and data processing unit;
**FIG. 7** is a block diagram illustrating an IP core development system;
**FIG. 8** is a block diagram illustrating an example computing environment for providing advanced network interface device-based memory access to reduce write amplification factor (WAF) and provide attestation, according to implementations herein;
**FIG. 9** is a block diagram of an example advanced network interface device (ANID) for providing ANID-based memory access to reduce WAF and provide attestation, in accordance with implementations herein;
**FIG. 10** is a block diagram depicting a computing environment with zoned namespace (ZNS) support implemented by an ANID, in accordance with implementations herein;
**FIG. 11** is a flow diagram illustrating an embodiment of a method for providing flexible data placement (FDP) by an ANID to reduce WAF;
**FIG. 12** is a flow diagram illustrating an embodiment of a method for supporting ZNS by an ANID to reduce WAF; and
**FIG. 13** is a flow diagram illustrating an embodiment of a method for providing data erasure attesting by an ANID.

### DETAILED DESCRIPTION

In the following description, numerous specific details are set forth to provide a more thorough understanding. However, it will be apparent to one of skill in the art that the embodiments described herein may be practiced without one or more of these specific details. In other instances, well-known features have not been described to avoid obscuring the details of the present embodiments.

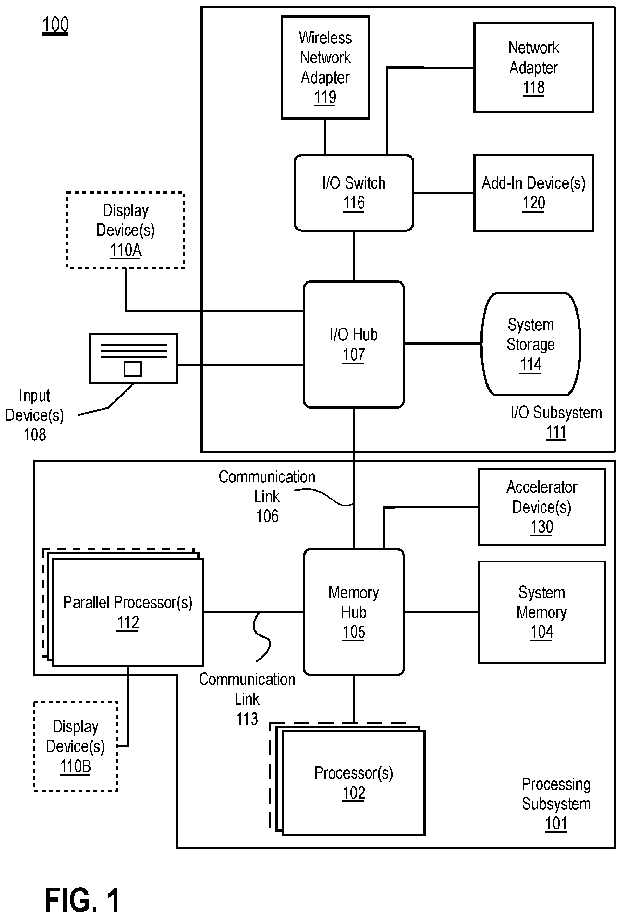

**FIG. 1** is a block diagram illustrating a computing system 100 configured to implement one or more aspects of the embodiments described herein. The computing system 100 includes a processing subsystem 101 having one or more processor(s) 102 and a system memory 104 communicating via an interconnection path that may include a memory hub 105. The memory hub 105 may be a separate component within a chipset component or may be integrated within the one or more processor(s) 102. The memory hub 105 couples with an I/O subsystem 111 via a communication link 106. The I/O subsystem 111 includes an I/O hub 107 that can enable the computing system 100 to receive input from one or more input device(s) 108. Additionally, the I/O hub 107 can enable a display controller, which may be included in the one or more processor(s) 102, to provide outputs to one or more display device(s) 110A. In one embodiment the one or more display device(s) 110A coupled with the I/O hub 107 can include a local, internal, or embedded display device.

The processing subsystem 101, for example, includes one or more parallel processor(s) 112 coupled to memory hub 105 via a communication link 113, such as a bus or fabric. The communication link 113 may be one of any number of standards-based communication link technologies or protocols, such as, but not limited to PCI Express, or may be a vendor specific communications interface or communications fabric. The one or more parallel processor(s) 112 may form a computationally focused parallel or vector processing system that can include a large number of processing cores and/or processing clusters, such as a many integrated core (MIC) processor. For example, the one or more parallel processor(s) 112 form a graphics processing subsystem that can output pixels to one of the one or more display device(s) 110A coupled via the I/O hub 107. The one or more parallel processor(s) 112 can also include a display controller and display interface (not shown) to enable a direct connection to one or more display device(s) 110B.

Within the I/O subsystem 111, a system storage unit 114 can connect to the I/O hub 107 to provide a storage mechanism for the computing system 100. An I/O switch 116 can be used to provide an interface mechanism to enable connections between the I/O hub 107 and other components, such as a network adapter 118 and/or wireless network adapter 119 that may be integrated into the platform, and various other devices that can be added via one or more add-in device(s) 120. The add-in device(s) 120 may also include, for example, one or more external graphics processor devices, graphics cards, and/or compute accelerators. The network adapter 118 can be an Ethernet adapter or another wired network adapter. The wireless network adapter 119 can include one or more of a Wi-Fi, Bluetooth, near field communication (NFC), or other network device that includes one or more wireless radios.

The computing system 100 can include other components not explicitly shown, including USB or other port connections, optical storage drives, video capture devices, and the like, which may also be connected to the I/O hub 107. Communication paths interconnecting the various components in FIG. 1 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Ultra Ethernet Transport (UET), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe. In one embodiment, time-aware communication protocols are supported, including time-aware RDMA, time-aware NVME, and time-aware NVME-oF, in which a precise times and rate of data consumption is used to control the transfer of data.

The one or more parallel processor(s) 112 may incorporate circuitry optimized for graphics and video processing, including, for example, video output circuitry, and constitutes a graphics processing unit (GPU). Alternatively or additionally, the one or more parallel processor(s) 112 can incorporate circuitry optimized for general purpose processing, while preserving the underlying computational architecture, described in greater detail herein. Components of the computing system 100 may be integrated with one or more other system elements on a single integrated circuit. For example, the one or more parallel processor(s) 112, memory hub 105, processor(s) 102, and I/O hub 107 can be integrated into a system on chip (SoC) integrated circuit. Alternatively, the components of the computing system 100 can be integrated into a single package to form a system in package (SIP) configuration. In one embodiment at least a portion of the components of the computing system 100 can be integrated into a multi-chip module (MCM), which can be interconnected with other multi-chip modules into a modular computing system.

In some configurations, the computing system 100 includes one or more accelerator device(s) 130 coupled with the memory hub 105, in addition to the processor(s) 102 and the one or more parallel processor(s) 112. The accelerator device(s) 130 are configured to perform domain specific acceleration of workloads to handle tasks that are computationally intensive or utilize high throughput. The accelerator device(s) 130 can reduce the burden placed on the processor(s) 102 and/or parallel processor(s) 112 of the computing system 100. The accelerator device(s) 130 can include but are not limited to smart network interface cards, data processing units, cryptographic accelerators, storage accelerators, artificial intelligence (AI) accelerators, neural processing units (NPUs), storage accelerators, and/or video transcoding accelerators.

It will be appreciated that the computing system 100 shown herein is illustrative and that variations and modifications are possible. The connection topology, including the number and arrangement of bridges, the number of processor(s) 102, and the number of parallel processor(s) 112, may be modified as desired. For instance, system memory 104 can be connected to the processor(s) 102 directly rather than through a bridge, while other devices communicate with system memory 104 via the memory hub 105 and the processor(s) 102. In other alternative topologies, the parallel processor(s) 112 are connected to the I/O hub 107 or directly to one of the one or more processor(s) 102, rather than to the memory hub 105. In other embodiments, the I/O hub 107 and memory hub 105 may be integrated into a single chip. It is also possible that two or more sets of processor(s) 102 are attached via multiple sockets, which can couple with two or more instances of the parallel processor(s) 112.

Some of the particular components shown herein are optional and may not be included in all implementations of the computing system 100. For example, any number of add-in cards or peripherals may be supported, or some components may be eliminated. Furthermore, some architectures may use different terminology for components similar to those illustrated in FIG. 1.

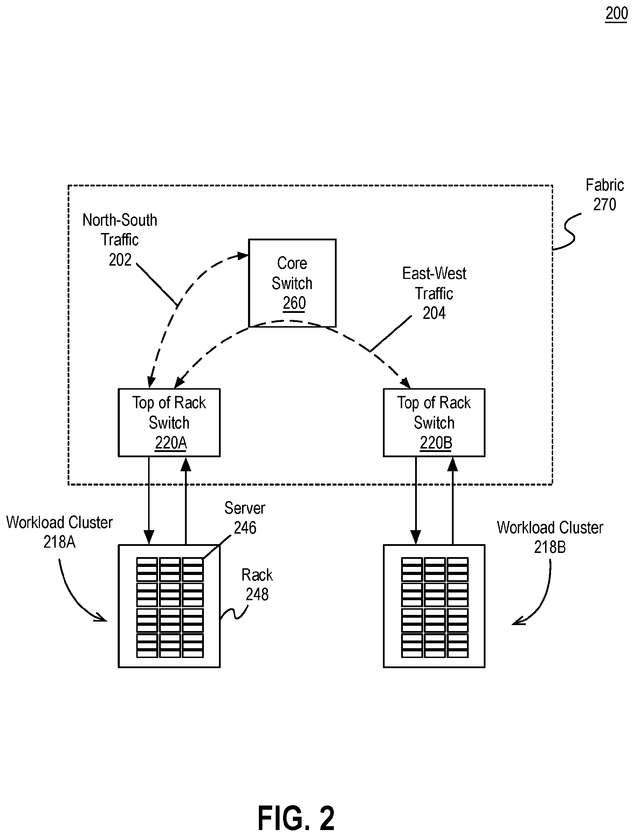

**FIG. 2** is a block diagram of a system 200 that includes selected components of a datacenter. The components of the illustrated datacenter may reside, for example within a cloud service provider (CSP), or another datacenter, which may be, by way of nonlimiting example, a traditional enterprise datacenter, an enterprise "private cloud," or a "public cloud," providing services such as infrastructure as a service (IaaS), platform as a service (PaaS), or software as a service (SaaS). The system 200 includes some number of workload clusters, including but not limited to workload cluster 218A and workload cluster 218B. The workload clusters may be clusters of individual servers, blade servers, rackmount servers, or any other suitable server topology.

The system 200 may include workload clusters 218A-218B. Each of the workload clusters 218A-218B can include a rack 248 that houses multiple servers (e.g., server 246). The rack 248 and the servers of the workload clusters 218A-218B may conform to the rack unit ("U") standard, in which one rack unit conforms to a 19 inch wide rack frame and a full-sized industry standard rack accommodates 42 units (42U) of equipment. One unit (1U) of equipment (e.g., a 1U server) may be 1.75 inches high and approximately 36 inches deep. In various configurations, compute resources such as processors, memory, storage, accelerators, and switches may fit into some multiple of rack units within a rack 248.

Each server 246 may host a standalone operating system configured to provide server functions, or the servers may be virtualized. A virtualized server may be under the control of a virtual machine manager (VMM), hypervisor, and/or orchestrator, and may host one or more virtual machines, virtual servers, or virtual appliances. The workload clusters 218A-218B may be collocated in a single datacenter, or may be located in different geographic datacenters. Depending on the contractual agreements, some servers may be specifically dedicated to certain enterprise clients or tenants while other servers may be shared.

The various devices in a datacenter may be connected to each other via a switching fabric 270, which may include one or more high speed routing and/or switching devices. The switching fabric 270 may provide north-south traffic 202 (e.g., traffic to and from the wide area network (WAN), such as the internet), and east-west traffic 204 (e.g., traffic across the datacenter). Historically, north-south traffic 202 accounted for the bulk of network traffic, but as web services become more complex and distributed, the volume of east-west traffic 204 has risen. In many datacenters, east-west traffic 204 now accounts for the majority of traffic. Furthermore, as the capability of each server 246 increases, traffic volume may further increase. For example, each server 246 may provide multiple processor slots, with each slot accommodating a processor having four to eight cores, along with sufficient memory for the cores. Thus, each server may host a number of VMs, each of which may be a source of traffic generation.

To accommodate the large volume of traffic in a datacenter, a highly capable switching fabric 270 may be provided. The illustrated switching fabric 270 is an example of a flat network in which each server 246 may have a direct connection to a top-of-rack switch (ToR switch 220A-220B) (e.g., a "star" configuration). A first ToR switch 220A can connect with a first workload cluster 218A, while a second ToR switch 220B can connect with a second workload cluster 218B. Each ToR switch 220A-220B may couple to a core switch 260. This two-tier flat network architecture is shown as an illustrative example and other architectures may be used, such as three-tier star or leaf-spine (also called "fat tree" topologies) based on the "Clos" architecture, hub-and-spoke topologies, mesh topologies, ring topologies, or 3-D mesh topologies, by way of nonlimiting example.

The switching fabric 270 may be provided by any suitable interconnect using any suitable interconnect protocol. For example, each server 246 may include a fabric interface (FI) of some type, a network interface card (NIC), or other host interface. The host interface itself may couple to one or more processors via an interconnect or bus, such as PCI, PCIe, or similar, and in some cases, this interconnect bus may be considered to be part of the switching fabric 270. The switching fabric may also use PCIe physical interconnects to implement more advanced protocols, such as compute express link (CXL).

The interconnect technology may be provided by a single interconnect or a hybrid interconnect, such as where PCIe provides on-chip communication, 1Gb or 10Gb copper Ethernet provides relatively short connections to a ToR switch 220A-220B, and optical cabling provides relatively longer connections to core switch 260. Interconnect technologies include, by way of nonlimiting example, Ultra Path Interconnect (UPI), FibreChannel, Ethernet, FibreChannel over Ethernet (FCoE), InfiniBand, PCIe, NVLink, or fiber optics, to name just a few. Some of these will be more suitable for certain deployments or functions than others, and selecting an appropriate fabric for the instant application is an exercise of ordinary skill.

In one embodiment, the switching elements of the fabric 270 are configured to implement switching techniques to improve the performance of the network in high usage scenarios. Example advanced switching techniques include but are not limited to adaptive routing, adaptive fault recovery, and adaptive and/or telemetry-based congestion control.

Adaptive routing enables a ToR 220A-220B switch and/or core switch 260 to select the output port to which traffic is switched based on the load on the selected port, assuming unconstrained port selection is enabled. An adaptive routing table can configure the forwarding tables of switches of the fabric 270 to select between multiple ports between switches when multiple connections are present between a given set of switches in an adaptive routing group. Adaptive fault recovery (e.g., self-healing) enables the automatic selection of an alternate port if the ported selected by the forwarding table port is in a failed or inactive state, which enables rapid recovery in the event of a switch-to-switch port failure. A notification can be sent to neighboring switches when adaptive routing or adaptive fault recovery becomes active in a given switch. Adaptive congestion control configures a switch to send a notification to neighboring switches when port congestion on that switch exceeds a configured threshold, which may cause those neighboring switches to adaptively switch to uncongested ports on that switch or switches associated with an alternate route to the destination.

Telemetry-based congestion control uses real-time monitoring of telemetry from network devices, such as switches within the fabric 270, to detect when congestion will begin to impact the performance of the fabric 270 and proactively adjust the switching tables within the network devices to prevent or mitigate the impending congestion. A ToR 220A-220B switch and/or core switch 260 can implement a built-in telemetry-based congestion control algorithm or can provide an API though which a programmable telemetry-based congestion control algorithm can be implemented. A continuous feedback loop may be implemented in which the telemetry-based congestion control system continuously monitors the network and adjusts the traffic flow in real-time based on ongoing telemetry data. Learning and adaptation can be implemented by the telemetry-based congestion control system in which the system can adapt to changing network conditions and improve its congestion control strategies based on historical data and trends.

Note however that while high-end fabrics are provided herein by way of illustration, more generally, the switching fabric 270 may include any suitable interconnect or bus for the particular application, including legacy interconnects used to implement a local area network (LANs), synchronous optical networks (SONET), asynchronous transfer mode (ATM) networks, wireless networks such as Wi-Fi and Bluetooth, 5G wireless, DSL interconnects, MOCA, or similar. It is also expressly anticipated that in the future, new network technologies will arise to supplement or replace some of those listed here, and any such future network topologies and technologies can be or form a part of the switching fabric 270.

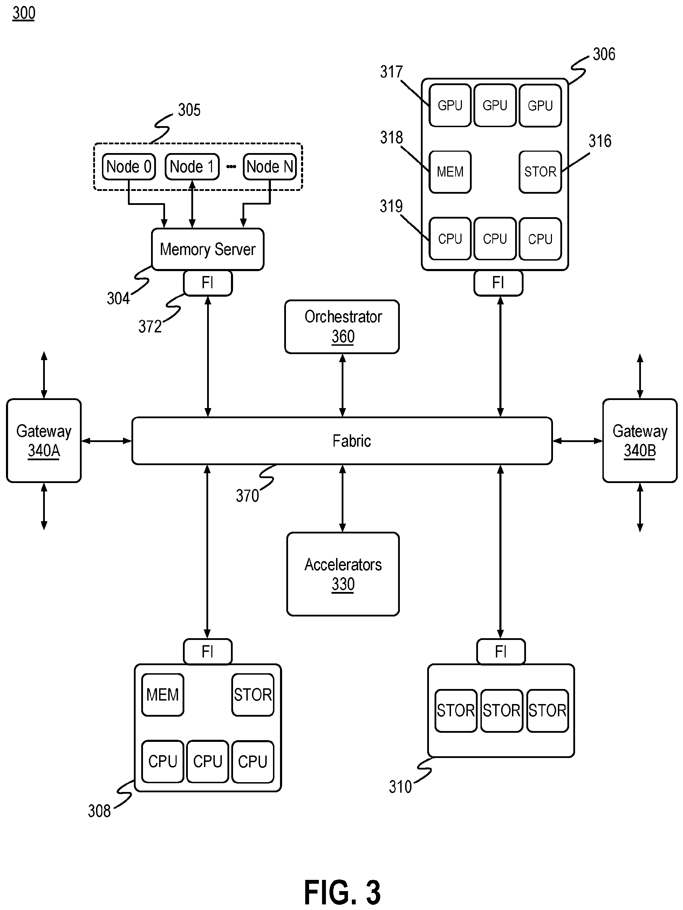

**FIG. 3** is a block diagram of a portion of a datacenter 300, according to one or more examples of the present specification. The illustrated portion of the datacenter 300 is not intended to include all components of a datacenter. The illustrated portion may be duplicated multiple times within the datacenter 300 and/or the datacenter 300 may include portions beyond the illustrated portions, depending on the capacity and functionality intended to be provided by the datacenter 300. The datacenter 300 may be, in various embodiments include components of the datacenter of the system 200 of FIG. 2, or may be a different datacenter.

The datacenter 300 includes a number of logic elements forming a plurality of nodes, where each node may be provided by a physical server, a group of servers, or other hardware. Each server may also host one or more virtual machines, as appropriate to its application. A fabric 370 is provided to interconnect various aspects of datacenter 300. The fabric 370 may be provided by any suitable interconnect technology, including but not limited to InfiniBand, Ethernet, PCIe, or CXL. The fabric 370 of the datacenter 300 may be a version of and/or include elements of the fabric 270 of the system 200 of FIG. 2. The fabric 370 of datacenter 300 can interconnect datacenter elements that include server nodes 304, 306, 308, 310, accelerators 330, gateways 340A-340B to other fabrics, fabric architectures, or interconnect technologies, and an orchestrator 360.

The server nodes 304, 306, 308, 310 of the datacenter 300 can include but are not limited to a memory server node 304, a heterogenous compute server node 306, a CPU server node 308, and a storage server node 310. The heterogenous compute server node 306 and a CPU server node 308 can perform independent operations for different tenants or cooperatively perform operations for a single tenant. The heterogenous compute server node 306 and a CPU server node 308 can also host virtual machines that provide virtual server functionality to tenants of the datacenter.

Each of the server nodes 304, 306, 308, 310 can connect with the fabric 370 via a fabric interface 372. The specific type of fabric interface 372 that is used depends at least in part on the technology or protocol that is used to implement the fabric 370. For example, where the fabric 370 is an Ethernet fabric, each fabric interface 372 may be an Ethernet network interface controller. Where the fabric 370 is a PCIe-based fabric, the fabric interfaces may be PCIe-based interconnects. Where the fabric 370 is an InfiniBand fabric, the fabric interface 372 of the heterogenous compute server node 306 and a CPU server node 308 may be a host channel adapter (HCA), while the fabric interface 372 of the memory server node 304 and storage server node 310 may be a target channel adapter (TCA). The various fabric interfaces may be implemented as intellectual property (IP) blocks that can be inserted into an integrated circuit as a modular unit, as can other circuitry within the datacenter 300.

The heterogenous compute server node 306 includes multiple CPU sockets, each of which can house a CPU 319, each of which may be, but is not limited to an Intel^{®} Xeon^{™} processor including a plurality of cores. The CPU 319 may also be, for example, a multi-core datacenter class ARM^{®} CPU, such as an NVIDIA^{®} Grace^{™} CPU. The heterogenous compute server node 306 includes memory devices 318 to store data for runtime execution and storage devices 316 to enable the persistent storage of data within non-volatile memory devices. The heterogenous compute server node 306 is enabled to perform heterogenous processing via the presence of GPUs (e.g., GPU 317), which can be used, for example, to perform high-performance compute (HPC), media server, cloud gaming server, and/or machine learning compute operations. In one configuration, the GPUs may be interconnected with each other and CPUs of the heterogenous compute server node 306 via interconnect technologies such as PCIe, CXL, or NVLink.

The CPU server node 308 includes a plurality of CPUs (e.g., CPU 319), memory (e.g., memory devices 318) and storage (storage devices 316) to execute applications and other program code that provide server functionality, such as web servers or other types of functionality that is remotely accessible by clients of the CPU server node 308. The CPU server node 308 can also execute program code that provides services or micro-services that enable complex enterprise functionality. The fabric 370 will be provisioned with sufficient throughput to enable the CPU server node 308 to be simultaneously accessed by a large number of clients, while also retaining sufficient throughput for use by the heterogenous compute server node 306 and to enable the use of the memory server node 304 and the storage server node 310 by the heterogenous compute server node 306 and the CPU server node 308. Furthermore, in one configuration, the CPU server node 308 may rely primarily on distributed services provided by the memory server node 304 and the storage server node 310, as the memory and storage of the CPU server node 308 may not be sufficient for all of the operations intended to be performed by the CPU server node 308. Instead, a large pool of high-speed or specialized memory may be dynamically provisioned between a number of nodes, so that each node has access to a large pool of resources, but those resources do not sit idle when that particular node does not utilize them. A distributed architecture of this type is possible due to the high speeds and low latencies provided by the fabric 370 of contemporary datacenters and may be advantageous because there is no reason to over-provision resources for each server node.

The memory server node 304 can include memory nodes 305 having memory technologies that are suitable for the storage of data used during the execution of program code by the heterogenous compute server node 306 and the CPU server node 308. The memory nodes 305 can include volatile memory modules, such as DRAM modules, and/or non-volatile memory technologies that can operate similar to DRAM speeds, such that those modules have sufficient throughput and latency performance metrics to be used as a tier of system memory at execution runtime. The memory server node 304 can be linked with the heterogenous compute server node 306 and/or CPU server node 308 via technologies such as CXL.mem, which enables memory access from a host to a device. In such configuration, a CPU 319 of the heterogenous compute server node 306, a CPU server node 308 can link to the memory server node 304 and access the memory nodes 305 of the memory server node 304 in a similar manner as, for example, the CPU 319 of the heterogenous compute server node 306 can access device memory of a GPU within the heterogenous compute server node 306. For example, the memory server node 304 may provide remote direct memory access (RDMA) to the memory nodes 305, in which, for example, the CPU server node 308 may access memory resources on the memory server node 304 via the fabric 370 using DMA operations, in a similar manner as how the CPU would access its own onboard memory.

The memory server node 304 can be used by the heterogenous compute server node 306 and CPU server node 308 to expand the runtime memory that is available during memory-intensive activities such as the training of machine learning models. A tiered memory system can be enabled in which model data can be swapped into and out of the memory devices 318 of the heterogenous compute server node 306 to memory of the memory server node 304 at higher performance and/or lower latency than local storage (e.g., storage devices 316). During workload execution setup, the entire working set of data may be loaded into one or more memory nodes 305 of the memory server node 304 and loaded into the memory devices 318 of the heterogenous compute server node 306 during execution of a heterogenous workload.

The storage server node 310 provides storage functionality to the heterogenous compute server node 306, the CPU server node 308, and potentially the memory server node 304. The storage server node 310 may provide a networked bunch of disks (NBOD), program flash memory (PFM), redundant array of independent disks (RAID), redundant array of independent nodes (RAIN), network attached storage (NAS), or other nonvolatile memory solutions. In one configuration, the storage server node 310 can couple with the heterogenous compute server node 306, the CPU server node 308, and/or the memory server node 304 such as NVMe-oF, which enables the NVME protocol to be implemented over the fabric 370. In such configurations, the fabric interface 372 of those servers may be smart interfaces that include hardware to accelerate NVMe-oF operations.

The accelerators 330 within the datacenter 300 can provide various accelerated functions, including hardware or coprocessor acceleration for functions such as packet processing, encryption, decryption, compression, decompression, network security, or other accelerated functions in the datacenter. In some examples, accelerators 330 may include deep learning accelerators, such as neural processing units (NPU), that can receive offload of matrix multiply operations of other neural network operations from the heterogenous compute server node 306 or the CPU server node 308. In some configurations, the accelerators 330 may reside in a dedicated accelerator server or distributed throughout the various server nodes of the datacenter 300. For example, an NPU may be directly attached to one or more CPU cores within the heterogenous compute server node 306 or the CPU server node 308. In some configurations, the accelerators 330 can include or be included within smart network controllers, infrastructure processing units (s), or data processing units, which combine network controller functionality with accelerator, processor, or coprocessor functionality.

In one configuration, the datacenter 300 can include gateways 340A-340B from the fabric 370 to other fabrics, fabric architectures, or interconnect technologies. For example, where the fabric 370 is an InfiniBand fabric, the gateways 340A-340B may be gateways to an Ethernet fabric. Where the fabric 370 is an Ethernet fabric, the gateways 340A-340B may include routers to route data to other portions of the datacenter 300 or to a larger network, such as the Internet. For example, a first gateway 340A may connect to a different network or subnet within the datacenter 300, while a second gateway 340B may be a router to the Internet.

The orchestrator 360 manages the provisioning, configuration, and operation of network resources within the datacenter 300. The orchestrator 360 may include hardware or software that executes on a dedicated orchestration server. The orchestrator 360 may also be embodied within software that executes, for example, on the CPU server node 308 that configures software defined networking (SDN) functionality of components within the datacenter 300. In various configurations, the orchestrator 360 can enable automated provisioning and configuration of components of the datacenter 300 by performing network resource allocation and template-based deployment. Template-based deployment is a method for provisioning and managing IT resources using predefined templates, where the templates may be based on standard templates utilized by the government, service provider, financial, standard or customer. The template may also dictate service level agreements (SLA) or service level obligations (SLO). The orchestrator 360 can also perform functionality including but not limited to load balancing and traffic engineering, network segmentation, security automation, real-time telemetry monitoring, and adaptive switching management, including telemetry-based adaptive switching. In some configurations, the orchestrator 360 can also provide multi-tenancy and virtualization support by enabling virtual network management, including the creation and deletion of virtual LANs (VLANs) and virtual private networks (VPNs), and tenant isolation for multi-tenant datacenters.

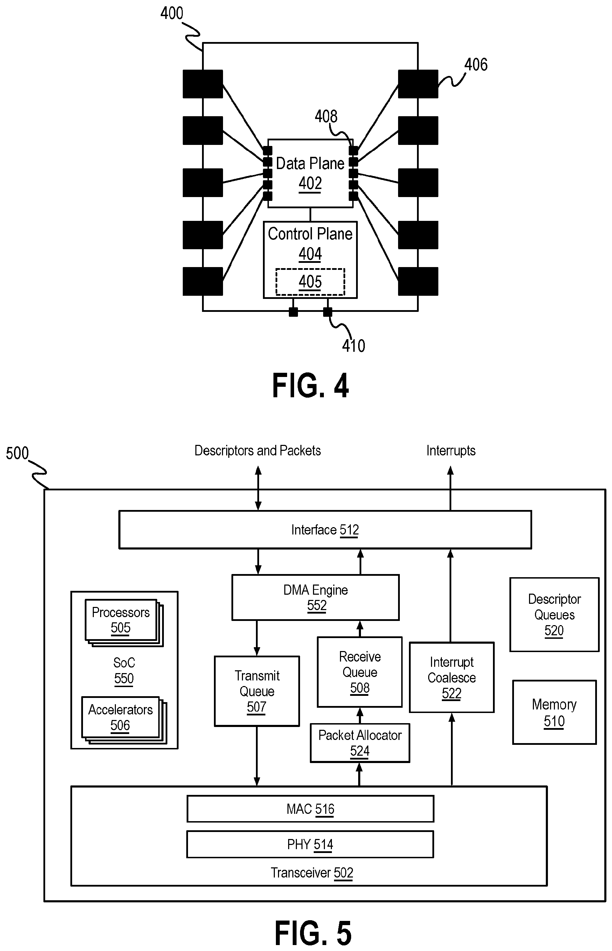

**FIG. 4** illustrates a forwarding element 400 that includes a control plane and a programmable data plane. The forwarding element 400 can be configured to forward data messages within a network based on a program provided by a user. The program, in some embodiments, includes instructions for forwarding data messages, as well as performing other processes such as firewall, denial of service attack protection, and load balancing operations. The forwarding element 400 can be any type of forwarding element, including but not limited to a switch, a switch chip, a router, or a bridge. The forwarding element 400 can forward data messages associated with various technologies, such as but not limited to Ethernet, Ultra Ethernet, InfiniBand, or NVLink.

In various network configurations, the forwarding element is deployed as a non-edge forwarding element in the interior of the network to forward data messages from a source device to a destination device. In network configurations, the forwarding element 400 is deployed as an edge forwarding element at the edge of the network to connect to compute devices (e.g., standalone or host computers) that serve as sources and destinations of the data messages. As a non-edge forwarding element, the forwarding element 400 forwards data messages between forwarding elements in the network, such as through an intervening network fabric. As an edge forwarding element, the forwarding element 400 forwards data messages to and from edge compute devices to each other, to other edge forwarding elements and/or to non-edge forwarding elements.

The forwarding element 400 includes circuitry to implement a data plane 402 that performs the forwarding operations of the forwarding element 400 to forward data messages received by the forwarding element to other devices. The forwarding element 400 also includes circuitry to implement a control plane 404 that configures the data plane circuit. Additionally, the forwarding element 400 includes physical ports 406 that receive data messages from, and transmit data messages to, devices outside of the forwarding element 400. The data plane 402 includes ports 408 that receive data messages from the physical ports 406 for processing. The data messages are processed and forwarded to another port on the data plane 402, which is connected to another physical port of the forwarding element 400. In addition to being associated with physical ports of the forwarding element 400, some of the ports 408 on the data plane 402 may be associated with other modules of the data plane 402.

The data plane is implemented by programmable packet processor circuits that provide several programmable message-processing stages that can be configured to perform the data-plane forwarding operations of the forwarding element 400 to process and forward data messages to their destinations. These message-processing stages perform these forwarding operations by processing data tuples (e.g., message headers) associated with data messages received by the data plane 402 in order to determine how to forward the messages. The message-processing stages include match-action units (MAUs) that try to match data tuples (e.g., header vectors) of messages with table records that specify action to perform on the data tuples. In some embodiments, table records are populated by the control plane 404 and are not known when configuring the data plane to execute a program provided by a network user. The programmable message-processing circuits are grouped into multiple message-processing pipelines. The message-processing pipelines can be ingress or egress pipelines before or after the forwarding element's traffic management stage that directs messages from the ingress pipelines to egress pipelines.

The specifics of the hardware of the data plane 402 depends on the communication protocol implemented via the forwarding element 400. Ethernet switches use application specific integrated circuits (ASICs) designed to handle Ethernet frames and the TCP/IP protocol stack. These ASICs are optimized for a broad range of traffic types, including unicast, multicast, and broadcast. Ethernet switch ASICs are generally designed to balance cost, power consumption, and performance, although high-end Ethernet switches may support more advanced features such as deep packet inspection and advanced QoS (Quality of Service). InfiniBand switches use specialized ASICs designed for ultra-low latency and high throughput. These ASICs enable features such as optimized for handling the InfiniBand protocol and provide support for RDMA and other features that utilize precise timing and high-speed data processing, although high-end Ethernet switches may support RoCE (RDMA over Converged Ethernet), which offers similar benefits to InfiniBand but with higher latency compared to native InfiniBand RDMA.

The forwarding element 400 may also be configured as an NVLink switch (e.g., NVSwitch), which is used to interconnect multiple graphics processors via the NVLink connection protocol. When configured as an NVLink switch, the forwarding element 400 can provide GPU servers with increased GPU to GPU bandwidth relative to GPU servers interconnected via InfiniBand. An NVLink switch can reduce network traffic hotspots that may occur when interconnected GPU-equipped servers execute operations such as distributed neural network training.

In general, where the data plane 402, in concert with a program executed on the data plane 402 (e.g., a program written in the P4 language), performs message or packet forwarding operations for incoming data, the control plane 404 determines how messages or packets should be forwarded. The behavior of a program executed on the data plane 402 is determined in part by the control plane 404, which populates match-action tables with specific forwarding rules. The forwarding rules that are used by the program executed on the data plane 402 are independent of the data plane program itself. In one configuration, the control plane can couple with a management port 410 that enables administrator configuration of the forwarding element 400. The data connection that is established via the management port 410 is separate from the data connections for ingress and egress data ports. In one configuration, the management ports 410 may connect with a management plane 405, which facilitates administrative access to the device, enables the analysis of device state and health, and enables device reconfiguration. The management plane 405 may be a portion of the control plane 404 or in direct communication with the control plane 404. In one implementation, there is no direct access for the administrator to components of the control plane 404. Instead, information is gathered by the management plane 405 and the changes to the control plane 404 are carried out by the management plane 405.

**FIG. 5** depicts an example network interface device 500. In one configuration, the network interface device 500 can include a transceiver 502, transmit queue 507, receive queue 508, memory 510, and bus interface 512, and DMA engine 552. The network interface device 500 can also include a system in a package (SiP) 550, which includes processors 505 to implement smart network interface device functionality, as well as accelerators 506 for various accelerated functionality, such as NVMe-oF or RDMA. In some implementations, network interface device 500 may include an SoC in lieu of, and/or in addition to, the SiP 550. The specific makeup of the network interface device 500 depends on the protocol implemented via the network interface device 500.

In various configurations, the network interface device 500 is configurable to interface with networks including but not limited to InfiniBand, Ethernet, or NVLink. For example, the transceiver 502 can be capable of receiving and transmitting packets in conformance with the InfiniBand, Ethernet, or NVLink protocols, although other protocols may be used. The transceiver 502 can receive and transmit packets from and to a network via a network medium. The transceiver 502 can include PHY circuitry 514 and media access control circuitry (MAC circuitry 516). PHY circuitry 514 can include encoding and decoding circuitry to encode and decode data packets according to applicable physical layer specifications or standards. MAC circuitry 516 can be configured to assemble data to be transmitted into packets, that include destination and source addresses along with network control information and error detection hash values.

The SiP 550 can include processors that may be any a combination of a CPU processor, graphics processing unit (GPU), field programmable gate array (FPGA), application specific integrated circuit (ASIC), or other programmable hardware device that allow programming of network interface device 500. For example, a smart network interface can provide packet processing capabilities in the network interface using processors 505. Configuration of operation of processors 505, including programmable data plane processors, can be programmed using Programming Protocol-independent Packet Processors (P4), C, Python, Broadcom Network Programming Language (NPL), x86, or ARM compatible executable binaries or other executable binaries.

The packet allocator 524 can provide distribution of received packets for processing by multiple CPUs or cores using timeslot allocation. An interrupt coalesce circuit 522 can perform interrupt moderation in which the interrupt coalesce circuit 522 waits for multiple packets to arrive, or for a time-out to expire, before generating an interrupt to host system to process received packet(s). Receive Segment Coalescing (RSC) can be performed by the network interface device 500 in which portions of incoming packets are combined into segments of a packet. The network interface device 500 can then provide this coalesced packet to an application. A DMA engine 552 can copy a packet header, packet payload, and/or descriptor directly from host memory to the network interface or vice versa, instead of copying the packet to an intermediate buffer at the host and then using another copy operation from the intermediate buffer to the destination buffer. The memory 510 can be any type of volatile or non-volatile memory device and can store any queue or instructions used to program the network interface device 500. The transmit queue 507 can include data or references to data for transmission by network interface. The receive queue 508 can include data or references to data that was received by network interface from a network. The descriptor queues 520 can include descriptors that reference data or packets in transmit queue 507 or receive queue 508. The bus interface 512 can provide an interface with host device. For example, the bus interface 512 can be compatible with PCI Express, although other interconnection standards may be used.

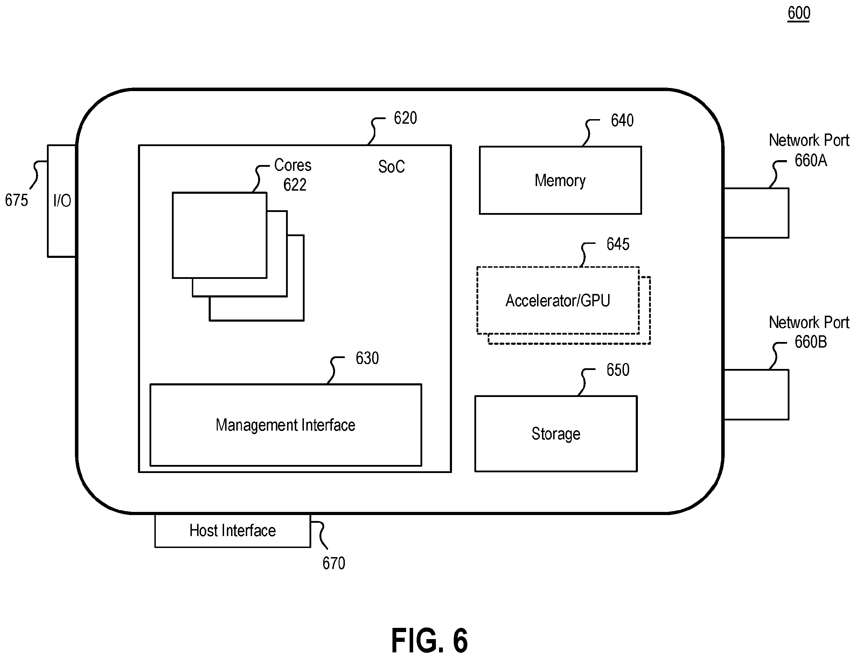

**FIG. 6** is a block diagram illustrating a programmable network interface 600 and data processing unit. The programmable network interface 600 is a programmable network engine that can be used to accelerate network-based compute tasks within a distributed environment. The programmable network interface 600 can couple with a host system via host interface 670. The programmable network interface 600 can be used to accelerate network or storage operations for CPUs or GPUs of the host system. The host system can be, for example, a node of a distributed learning system used to perform distributed training, for example, as shown in FIG. 6. The host system can also be a data center node within a data center.

In one embodiment, access to remote storage containing model data can be accelerated by the programmable network interface 600. For example, the programmable network interface 600 can be configured to present remote storage devices as local storage devices to the host system. The programmable network interface 600 can also accelerate RDMA operations performed between GPUs of the host system with GPUs of remote systems. In one embodiment, the programmable network interface 600 can enable storage functionality such as, but not limited to NVME-oF. The programmable network interface 600 can also accelerate encryption, data integrity, compression, and other operations for remote storage on behalf of the host system, allowing remote storage to approach the latencies of storage devices that are directly attached to the host system.

The programmable network interface 600 can also perform resource allocation and management on behalf of the host system. Storage security operations can be offloaded to the programmable network interface 600 and performed in concert with the allocation and management of remote storage resources. Network-based operations to manage access to the remote storage that would otherwise by performed by a processor of the host system can instead be performed by the programmable network interface 600.

In one embodiment, network and/or data security operations can be offloaded from the host system to the programmable network interface 600. Data center security policies for a data center node can be handled by the programmable network interface 600 instead of the processors of the host system. For example, the programmable network interface 600 can detect and mitigate against an attempted network-based attack (e.g., DDoS) on the host system, preventing the attack from compromising the availability of the host system.

The programmable network interface 600 can include a system on a chip (SoC 620) that executes an operating system via multiple processor cores 622. The processor cores 622 can include general-purpose processor (e.g., CPU) cores. In one embodiment the processor cores 622 can also include one or more GPU cores. The SoC 620 can execute instructions stored in a memory device 640. A storage device 650 can store local operating system data. The storage device 650 and memory device 640 can also be used to cache remote data for the host system. Network ports 660A-660B enable a connection to a network or fabric and facilitate network access for the SoC 620 and, via the host interface 670, for the host system. In one configuration, a first network port 660A can connect to a first forwarding element, while a second network port 660B can connect to a second forwarding element. Alternatively, both network ports 660A-660B can be connected to a single forwarding element using a link aggregation protocol (LAG). The programmable network interface 600 can also include an I/O interface 675, such as a USB interface. The I/O interface 675 can be used to couple external devices to the programmable network interface 600 or as a debug interface. The programmable network interface 600 also includes a management interface 630 that enables software on the host device to manage and configure the programmable network interface 600 and/or SoC 620. In one embodiment the programmable network interface 600 may also include one or more accelerators or GPUs 645 to accept offload of parallel compute tasks from the SoC 620, host system, or remote systems coupled via the network ports 660A-660B. For example, the programmable network interface 600 can be configured with a graphics processor and participate in general-purpose or graphics compute operations in a datacenter environment.

One or more aspects may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the embodiments described herein.

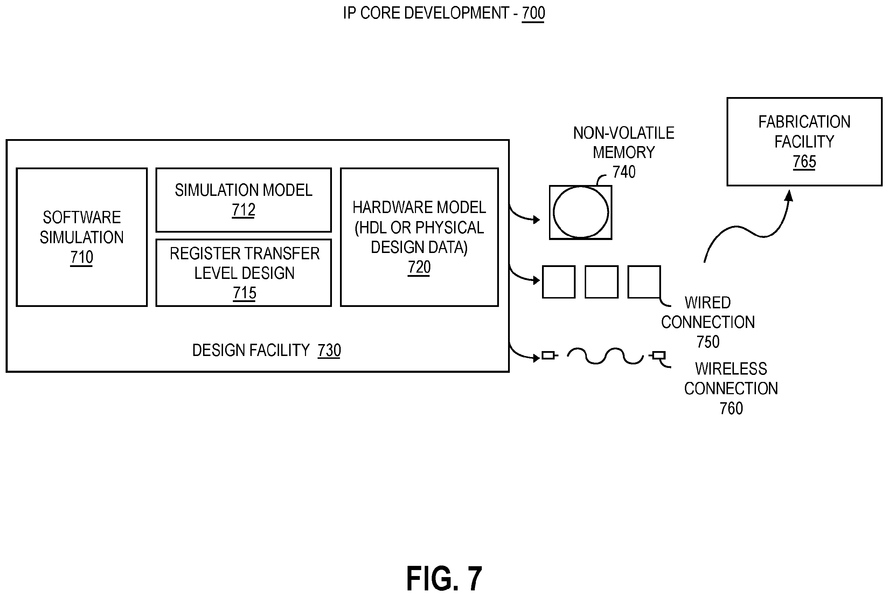

**FIG. 7** is a block diagram illustrating an IP core development system 700. The IP core development system 700 may be used to manufacture an integrated circuit to perform operations of fabric and datacenter components described herein. The IP core development system 700 may be used to generate modular, re-usable designs that can be incorporated into a larger design or used to construct an entire integrated circuit (e.g., an SOC integrated circuit). A design facility 730 can generate a software simulation 710 of an IP core design in a high-level programming language (e.g., C/C++). The software simulation 710 can be used to design, test, and verify the behavior of the IP core using a simulation model 712. The simulation model 712 may include functional, behavioral, and/or timing simulations. A register transfer level design (RTL design 715) can then be created or synthesized from the simulation model 712. The RTL design 715 is an abstraction of the behavior of the integrated circuit that models the flow of digital signals between hardware registers, including the associated logic performed using the modeled digital signals. In addition to an RTL design 715, lower-level designs at the logic level or transistor level may also be created, designed, or synthesized. Thus, the particular details of the initial design and simulation may vary.

The RTL design 715 or equivalent may be further synthesized by the design facility into a hardware model 720, which may be in a hardware description language (HDL), or some other representation of physical design data. The HDL may be further simulated or tested to verify the IP core design. The IP core design can be stored for delivery to a fabrication facility 765 using non-volatile memory 740 (e.g., hard disk, flash memory, or any non-volatile storage medium). The fabrication facility 765 may be a 3^{rd} party fabrication facility. Alternatively, the IP core design may be transmitted (e.g., via the Internet) over a wired connection 750 or wireless connection 760. The fabrication facility 765 may then fabricate an integrated circuit that is based at least in part on the IP core design. The fabricated integrated circuit can be configured to perform operations in accordance with at least one embodiment described herein.

### Advanced Network Interface Device-Based Memory Access to Reduce Write Amplification Factor and Provide Attestation

In highly virtualized environments, significant amounts of server resources are expended processing tasks that are beyond user applications. Such processing tasks can include hypervisors, container engines, network and storage functions, security, and large amounts of network traffic. To address these various processing tasks, advanced network interface devices with hardened accelerators and network connectivity have been introduced. These advanced network interface devices are referred to as infrastructure processing units (IPUs), data processing units (DPUs), programmable network devices, and so on.

The advanced network interface devices can accelerate and manage infrastructure functions using dedicated and programmable cores deployed in the devices. The advanced network interface devices can provide for infrastructure offload and an extra layer of security by serving as a control point of the host for running infrastructure applications. By using an advanced network interface devices, the overhead associated with running infrastructure tasks can be offloaded from a server device.

In implementations herein, the advanced network interface devices may be referred to generally as an advance network interface device (ANID), a network interface device, a programmable network interface device, an IPU, or a DPU, for example. For the discussion herein, the advanced network interface device will be referred to in abbreviated form as ANID.

One infrastructure task that can be handled by an ANID is memory access. Memory access can be an expensive part of any computational system. Memory commands may include a storage command that can be generated by a requesting device (which may include circuitry to generated a storage command) and be sent to a target device (which may include memory and circuitry such as a controller to decode and process the storage command). Data returned by a storage device may be consumed (e.g., processed) by a consuming device, which may be the same as the requesting device or may be a different device.

A storage command may be communicated to and/or may be performed by any suitable memory node that includes addressable memory. For example, such memory nodes can include memory devices and/or storage devices, such as storage drives (such as SSDs with flash memory, hard disk drives, etc.); storage appliances; host memory (e.g., that stores data for applications being run by an XPU, host memory may be DRAM or other volatile memory in some instances); caches ( e.g., an L1 cache, an L2 cache, a last level cache, other specialized cache, etc.); a first in first out (FIFO) structure within a cache; a scratch pad memory within a cache; a memory card; a Universal Serial Bus (USB) drive; a Dual In-line Memory Module (DIMM), such as a Non-Volatile DIMM (NVDIMM); storage integrated within a device such as a smartphone, camera, or media player; or other suitable storage device. In various implementations, the storage device may be used in any suitable configuration such as memory pooling, two-level memory (2LM), multi-tiered memory, Compute Express Link (CXL) attached, multi-tenant, and scalable I/O virtualization (e.g., Scalable IOV) environments.

The memory of a storage device may comprise non-volatile memory and/or volatile memory. Non-volatile memory is a storage medium that does not utilize power to maintain the state of data stored by the medium, thus non-volatile memory may have a determinate state even if power is interrupted to the device housing the memory. Nonlimiting examples of nonvolatile memory may include any or a combination of: 3D crosspoint memory, phase change memory ( e.g., memory that uses a chalcogenide glass phase change material in the memory cells), ferroelectric memory, silicon-oxide-nitride-oxide-silicon (SONOS) memory, polymer memory ( e.g., ferroelectric polymer memory), ferroelectric transistor random access memory (Fe-TRAM) ovonic memory, anti-ferroelectric memory, nanowire memory, electrically erasable programmable read-only memory (EEPROM), a memristor, single or multi-level phase change memory (PCM), Spin Hall Effect magnetic RAM (SHE-MRAM), and Spin Transfer Torque Magnetic RAM (STTRAM), a resistive memory, magnetoresistive random access memory (MRAM) memory that incorporates memristor technology, resistive memory including the metal oxide base, the oxygen vacancy base and the conductive bridge Random Access Memory (CB-RAM), a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

Volatile memory is a storage medium that utilizes power to maintain the state of data stored by the medium (thus volatile memory is memory whose state (and therefore the data stored on it) is indeterminate if power is interrupted to the device housing the memory). Dynamic volatile memory entails refreshing the data stored in the device to maintain state. One example of dynamic volatile memory includes DRAM (dynamic random access memory), or some variant such as synchronous DRAM (SD RAM). A memory subsystem as described herein may be compatible with a number of memory technologies, such as DDR3 (double data rate version 3), DDR4 (DDR version 4), DDR4E (DDR version 4, extended), LPDDR3 (low power DDR version 3), LPDDR4 (LOW POWER DOUBLE DATA RATE (LPDDR) version 4), WIO2 (Wide I/O 2 (WideIO2)), HBM (HIGH BANDWIDTH MEMORY DRAM), DDR5 (DDR version 5), HBM2 (HBM version 2), or others or combinations of memory technologies, and technologies based on derivatives or extensions of such specifications.

In certain memory protocols, a memory removal command (e.g., a deallocation command, an erase command, a delete command, data coherency for write flushes, etc.) may provide the ability to remove large areas of memory (e.g., in a storage drive, such as a solid state drive (SSD)) quickly. In some cases, with SSDs, such as Flash memory, a phenomenon called write amplification may occur. Write amplification refers to when the actual amount of information physically written to a storage media is a multiple (referred to as the write amplification factor (WAF)) of the logical amount of information intended to be written. Because SSDs and Flash memory should be erased before they can be rewritten, with much coarser granularity of the erase operation when compared to the write operation, the process to perform these operations results in moving (or re-writing) user data and metadata more than once. This multiplying effect, or WAF, can increase the number of writes utilized over the life of the SSD, which shortens the time it can reliably operate. The increased writes also consume bandwidth to the SSD and/or Flash memory, which reduces write performance to the SSD and/or Flash memory.

In some current approaches to reduce WAF, the SSD controller may implement flexible data placement (FDP) and/or Zone Namespace (ZNS). FDP enables a host to provide hints on where to place data in memory via a virtual handle or pointer. ZNS is a command set for SSDs using the NVMe^{™} protocol, where a zoned block storage interface is exposed between the host and the SSD, that allows the SSD to align the data to its media precisely. ZNS divides the SSD into logically separate and individually addressable storage spaces, with each ZNS having its own I/O queue. However, the conventional FDP and ZNS approaches are not network-aware solutions and do not consider network-related information for their data placement approaches.

An additional technical problem experienced when interfacing with SSDs includes attestation of erasure of SSD memory. Typically, when addressing SSD and Flash memory from outside of the SSD or Flash memory, a logical address is utilized. When receiving a command to erase SSD memory, such as Flash memory, it is the erasure of the physical address that is used to attest the erasure. Conventionally, to improve performance, some SSDs and Flash memories confirm that memory is deleted by saying that the logical address is no longer assigned to the physical address. The physical address is sent to a garbage collection unit, which overtime erases the data at the physical address for reuse by some other data. However, attesting to an end user (application, customer, etc.) that the data is erased involves confirmation that the data at physical address has been erased.

As such, implementations of the disclosure address the above-noted technical problems by providing for advanced network interface device-based memory access to reduce WAF and provide attestation. In implementations herein, an ANID is utilized to provide for FDP and ZNS using network-based information for the decision-making processes in the FDP and ZNS approaches. For example, the ANID can utilize flow, precise time, and other network related/network-known information available to the ANID (e.g., Quality of Service (QoS), identification of physical function (PF), identification of virtual function (VF), namespace ID (NSID), flow ID, service level objectives (SLOs), process space address ID (PASID), etc.) to inform the SSID (e.g., via hints) to allow placement of the data into the SSD to improve WAF. Furthermore, the ANID can implement ZNS by utilizing a PASID of applications to perform a zone lookup for the ZNS of the SSD. Lastly, implementations herein enable the ANID to perform at-speed attestation of erasure of SSD by utilizing hints between the SSD and the ANID to inform the ANID when both logical and physical memory locations in the SSD have been erased. Then, the ANID can attest that the data is no longer on the SSD.

A technical advantage of implementations of the disclosure includes improved lifetime length of memory, such as SSDs (e.g., Flash) due to improved WAF, improved placement of data to reduce length write and erase cycles and/or improve latency due to optimized data placement, and improved security due to attestation of erasure of data at a physical address.

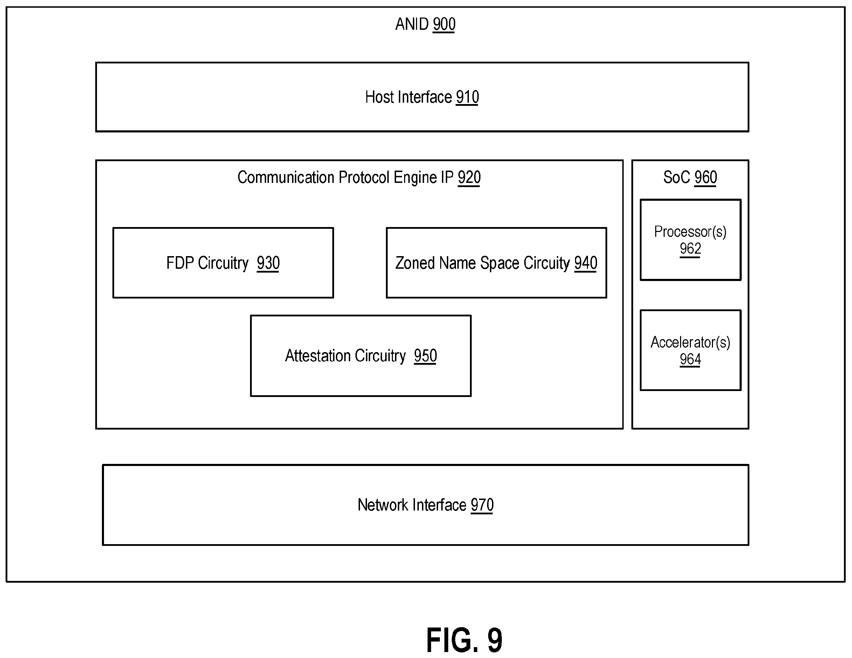

Further details on the implementations of advanced network interface device-based memory access to reduce WAF and provide attestation are described below with respect to FIGS. 9-13.

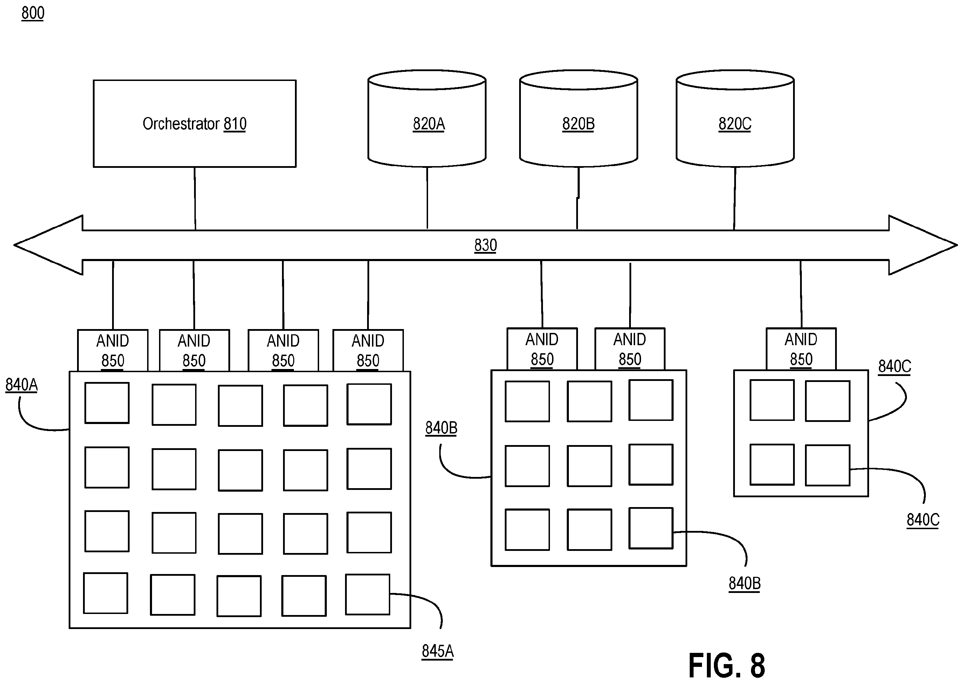

**FIG. 8** is a block diagram illustrating an example computing environment 800 for providing advanced network interface device-based memory access to reduce WAF and provide attestation, according to implementations herein. In one implementation, the computing environment 800 illustrates an example computing environment in which a storage command may be used. Computing environment 800 may include various clusters ( e.g., 840A-C) of processing units 845A-845C (e.g., GPUs, Tensor Flow processors, other types of accelerators, etc.). A cluster 840 may also include one or more ANIDs 850 to facilitate communication between the processing units 845 and network 830. Network 830 may further be coupled to various storage devices 820A-C and orchestrator 810.

The elements of FIG. 8 having the same or similar names as the elements of any other figure herein describe the same elements as in the other figures, can operate or function in a manner similar to that, can comprise the same components, and can be linked to other entities, as those described elsewhere herein, but are not limited to such. Therefore, the discussion of any features in combination with a graphics processor herein also discloses a corresponding combination with the example computing environment 800, but is not limited to such.

In various embodiments, components of computing environment 800 (including requesting, target, and/or consuming devices) may be coupled together through one or more networks (e.g., network) comprising any number of intervening network nodes, such as routers, switches, or other computing devices. The network, the requesting device, and/or the target device may be part of any suitable network topography, such as a data center network, a wide area network, a local area network, an edge network, or an enterprise network.

The storage command may be communicated from the requesting device to the target device and/or data read responsive to a storage command may be communicated from the target device to the consuming device over any suitable communication protocol (or multiple protocols), such as peripheral component interconnect (PCI), PCI Express (PCie), CXL, Universal Serial Bus (USB), Serial Attached SCSI (SAS), Serial ATA (SATA), InfiniBand, Fibre Channel (FC), IEEE 802.3, IEEE 802.11, Ultra Ethernet, or other current or future signaling protocol. The storage command may include, but is not limited to, commands to write data, read data, and/or erase data, for example. In particular embodiments, the storage commands conform with a logical device interface specification (also referred to herein as a network communication protocol) such as Non-Volatile Memory Express (NVMe) or Advanced Host Controller Interface (AHCI), for example.

A computing platform, such as computing environment 800, may include one or more requesting devices, consuming devices, and/or target devices. Such devices may comprise one or more processing units (e.g., processing units 845) to generate a storage command, decode and process a storage command, and/or consume (e.g., process) data requested by a storage command. As used herein, the terms "processor unit", "processing unit", "processor", or "processing element", may refer to any device or portion of a device that processes electronic data from registers and/or memory to transform that electronic data into other electronic data that may be stored in registers and/or memory. A processing unit may include one or more digital signal processors (DSPs ), application-specific integrated circuits (ASICs), central processing units (CPUs), graphics processing units (GPUs), general-purpose GPUs (GPGPUs), accelerated processing units (APUs), field-programmable gate arrays (FPGAs ), neural network processing units (NPUs), edge processing units (EPUs), vector processing units, software defined processing units, video processing units, data processor units (DPUs), memory processing units, storage processing units, accelerators ( e.g., graphics accelerator, compression accelerator, artificial intelligence accelerator, networking accelerator), controller cryptoprocessors (specialized processors that execute cryptographic algorithms within hardware), server processors, I/O controllers, NICs (e.g., SmartNICs), infrastructure processing units (IPUs), microcode engines, memory controllers (e.g., cache controllers, host memory controllers, DRAM controllers, SSD controllers, hard disk drive (HDD) controllers, nonvolatile memory controllers, etc.), or any other suitable type of processor units. As such, a processor unit may be referred to as an XPU. In some implementations, computing environment 800 may include components to implement, e.g., an Ethernet, Ultra Ethernet, CXL, a network using a proprietary network protocol, or other suitable network.

In some embodiments, computing environment 800 may be a data center or other similar environment, where any combination of the components may be placed together in a rack or shared in a data center pod. In various embodiments, computing environment 800 may represent a telecom environment, in which any combination of the components may be enclosed together in curb/street furniture or an enterprise wiring closet.

In some embodiments, orchestrator 810 may function as a requesting device and send storage commands as described herein to storage devices 820A-C functioning as target devices. Some of these commands may read data that is then supplied to processing units 845 that are functioning as consuming devices. In some embodiments, a processing unit 845 or an ANID 850 may function as the requesting device. Thus, a processing unit 845 could be both a requesting device and the consuming device. In one implementation, ANID 850 may be the same as network interface device 500 of FIG. 5 herein or programmable network interface 600 and data processing unit of FIG. 6 herein, and can be referred to as an IPU or a DPU, for example. As previously discussed, the ANID 850 in implementations herein is configured to provide for FDP and ZNS to reduce WAF, as well as at-speed attestation to confirm that a physical address in memory is erased.

**FIG. 9** is a block diagram of an example ANID 900 for providing ANID-based memory access to reduce WAF and provide attestation, in accordance with implementations herein. In one implementation, ANID 900 may be the same as ANID 850 described with respect to FIG. 8. In some implementations, ANID 900 may be the same as network interface device 500 of FIG. 5 described herein and/or programmable network interface 600 and data processing unit of FIG. 6 described herein, and may be referred to as an IPU or a DPU in some examples.

In one configuration, the ANID 900 can include a host interface 910, communication protocol engine IP 920, and a network interface 970. The ANID 900 can also include an SoC 960, which includes processors 962 to implement smart network interface device functionality, as well as accelerators 964 for various accelerated functionality, such as NVMe-oF or RDMA. The specific makeup of the ANID 900 depends on the protocol implemented via the ANID 900.

In various configurations, the ANID 900 is configurable to interface with networks including but not limited to InfiniBand, Ethernet, or NVLink. The SoC 960 can include processors that may be any a combination of a CPU processor, graphics processing unit (GPU), field programmable gate array (FPGA), application specific integrated circuit (ASIC), or other programmable hardware device that allow programming of ANID 900. For example, a smart network interface can provide packet processing capabilities in the network interface using processors 962. Configuration of operation of processors 962, including programmable data plane processors, can be programmed using Programming Protocol-independent Packet Processors (P4), C, Python, Broadcom Network Programming Language (NPL), x86, or ARM compatible executable binaries or other executable binaries. In implementations herein, the ANID 900 can provide for one or more of cryptographic services, compression-related services, storage security service, or access control, to name a few examples.

A communication protocol engine IP 920 can copy a packet header, packet payload, and/or descriptor directly from host memory to the network interface or vice versa, instead of copying the packet to an intermediate buffer at the host and then using another copy operation from the intermediate buffer to the destination buffer. In some implementations, more than one communication protocol engine IP 920 can be implemented in ANID 900. For example, an NVME (including NVMe-oF) communication protocol engine IP can be implemented and/or an RDMA communication protocol engine IP can be implemented, although other communication protocols can also be used. The host interface 910 can provide an interface with host device. For example, the host interface 910 can be compatible with PCI Express (PCIe), although other interconnection standards may be used.

As previously discussed, the ANID 900 can provide for ANID-based memory access to reduce WAF and provide attestation. In some implementations, the ANID 900 can provide an though which ANID-based memory access to reduce WAF and provide attestation can be implemented. In some implementations, the API can query whether a computing system supports the ANID-based memory access capability (to reduce WAF and provide attestation). For example, the API can query whether the FDP or ZNS functionality as described herein is provided by the ANID 900. In some implementations, the API can enable or disable such a capability. For example, the API may be configured to enable and/or disable the FDP or ZNS functionality in the ANID 900.

As illustrated, ANID 900 includes FDP circuitry 930, ZNS circuitry 940, and attestation circuitry 950. FDP circuitry 930 can provide for ANID-based FDP storage hints to improve WAF, ZNS circuitry 940 can provide ANID-based ZNS, and attestation circuitry 950 can provide for at-speed attestation of data erasure operations, in accordance with implementations herein.

With respect to FDP circuitry 930, the ANID 900 can utilize the FDP circuitry 930 to provide for a data placement process for data writes to memory, such as SSD memory including Flash memory. In one implementation, the FDP circuitry 930 can work in concert with the host interface 910 and a memory controller (not shown) (e.g., SSD controller) hosted on the ANID 900 to cause data that is to be written to the memory to be coalesced (combined, joined, stored adjacent to, etc.) with other data based on the network-related information that is known to the ANID 900 by virtue of the ANID's 900 functionality and placement in a computing environment. The ANID 900 is aware of networking-related information, such as QoS, PF, VF, NSID, flow ID, precise timing, SLOs, PASIDs, and so on. Furthermore, the ANID 900 is aware of the memory/drive characteristics (e.g., memory page size, etc.) of the communicably coupled memory node (memory device or storage device, etc.) by virtue of the ANID 900 operating as a network interface device.

Using the network-related and memory node characteristic data, the FDP can coalesce data to be written to the memory node with other data on the memory node that is accordance with the network-related information. In one implementation, causing the data to be coalesced may include providing hints to the memory node for placement of the data. In some implementations, causing the data to be coalesced takes into consideration the memory drive characteristics, such as the Flash page size, to inform where the data should be placed in the memory drive. In some implementations, the FDP circuitry 930 can coalesces data for the same memory area (e.g., bank, sector, address, etc.).

In some implementations, the FDP circuitry 930 can provide a name space for use in the data coalescence process. The FDP circuitry 930 can also support standard Flash device features as part of implementing the FDP process at ANID 900.

In some implementations, the FDP circuitry 930 utilizes the memory node characteristics to create media alignment as part of the FDP process. For example, the FDP circuitry 930 may cause the data that it is coalescing to be aligned in accordance with page sizes. Furthermore, the FDP circuitry 930 can enable erase operations on any media boundaries.

In some implementations, when the memory node is Flash memory, the FDP circuitry 930 can provide RAID or XOR scrambling for memory nodes, such as SSD or Flash. Moreover, the FDP circuitry 930 can perform Flash garbage collection across all SSDs that the ANID 900 is communicably coupled.

With respect to ZNS circuitry 940, the ANID can utilize the ZNS circuitry 940 to implement ZNS in implementations herein. As previously discussed, ZNS is a command set for SSD memories using the NVMe^{™} protocol, where a zoned block storage interface is exposed between the host and the SSD that allows the SSD to align the data to its media precisely. ZNS divides the SSD into logically separate and individually addressable storage spaces, with each ZNS having its own I/O queue.

ANID 900 performs logical block address (LBA)-based placement in SSD memory, such as Flash, or other memory nodes external to the Flash. The ZNS circuitry 940 can support ZNS by utilizing an identifier, such as a process address space ID (PASID) of applications, to perform a zone lookup for the ZNS of the SSD. The PASID is a feature that enables sharing of a single endpoint device across multiple processes while providing each process a complete virtual address space (e.g., 64-bit). In implementations herein, every process has its own PASID and every process can use the PASID to differentiate itself from other processes when it sends a command (e.g., PCIe commands, such as a write command) to a device (e.g., the ANID 900).

In one implementation, the ZNS circuitry 940 can implement a scale-out storage algorithm that looks into specific regions of a lookup table based on the PASID. Data is place in the memory node based on which application (process) is accessing the data. The PASID of that application/process is used as a lookup to map the data to a certain zone of the memory node. In implementations herein, the lookup process may be performed in hardware and/or could be programmable by software as a series of programmable lookups performed in either a hardware and/or software path of the ANID 900 and/or ZNS circuitry 940.

In one implementation, the ZNS circuitry 940 may utilize hints that the target could send back to the initiator. The initiator SW can use those hints to change how and which applications (processes) are assigned certain zoned namespaces, for example. The memory of the target SW could send the hints back to the initiator SW that can then go and re-shuffle and reprogram the tables set for these lookups. Subsequently, the application (process) can be mapped to a certain zone in the ZNS using the PASID for that application (process). In one implementation, the hint can include, but is not limited to, a zone to use, an indication that a particular zone is getting slow and a different zone should be used, WAF information that is associated with a particular zone and could cause the mapping to be changed to another zone, and so on.

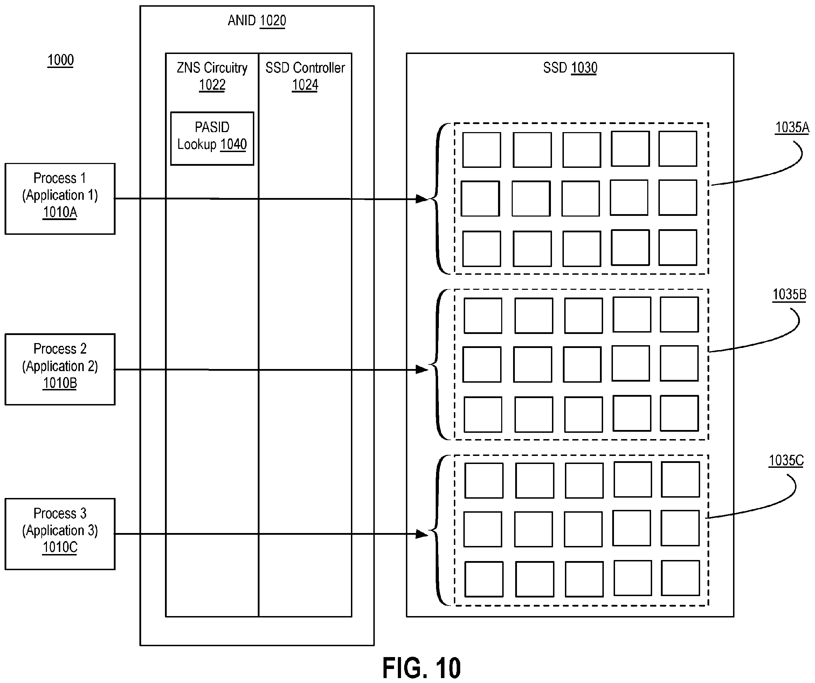

**FIG. 10** is a block diagram depicting a computing environment 1000 with ZNS support implemented by an ANID, in accordance with implementations herein. Computing environment 1000 can include a memory node, such as SSD 1030, including a plurality of Flash memory devices 1035A-1035C. SSD 1030 may be the same as storage devices 820A-802C described with respect to FIG. 8. SSD 1030 may be communicably coupled to ANID 1020. ANID 1020 may be the same as ANID 850 of FIG. 8 and/or ANID 900 of FIG. 9. ANID 1020 may include ZNS circuitry 1022 and an SSD controller 1024.

In one example implementation, a plurality of processes (applications) 1010A-1010C may access SSD 1030 via memory requests sent through ANID 1020. ZNS circuitry 1022 can work in conjunction with SSD controller 1024 to enable ZNS support for SSD 1030. As shown in computing environment 1000, process 1 1010A is associated with zoned namespace 1 1035A, process 2 1010B is associated with zoned namespace 2 1035B, and process 3 1010C is associated with zoned namespace 3 1035C. The ZNS circuitry 1022 can perform a PASID lookup 1040 to identify the zoned namespace 1035A-1035C associated with the process 101A-101C requesting the data to/from SSD 1030.

With respect to attestation circuitry 950, the ANID 900 can utilize attestation circuitry 950 to perform at-speed attestation of data erasure by the memory node. In some implementations, this attestation can be done at-speed (e.g., for every access to the memory node). In one example use case, this feature provides a security check that allows customers in a cloud service provider (CSP) data center to know that their data was erased, by having the ANID 900 attest to the erasure.

In one implementation, the attestation circuitry 950 can orchestrate hint passing between the memory node (e.g., SSD) and the attestation circuitry 950. The hints can be configured to allow the attestation circuitry 950 to be informed when both a logical and a physical memory location in a memory node have been erased. Then, the attestation circuitry 950 can attest that the data is no longer on the memory node.

As previously noted, the attestation of the erasure of data by attestation circuitry 950 can lead to improved security due to the attestation of the erasure of data at a physical address. However, this is a minimum case result. In some cases, the attested portion of a flash memory entry is erased (related to the attestation), but another portion is re-written to the flash in another location. For example, if there was a 4KB sector and implementations sought to attest to the erasure of 2KB, then the full 4KB would be erased and the non-erased 2KB would be written back into a new flash physical location.

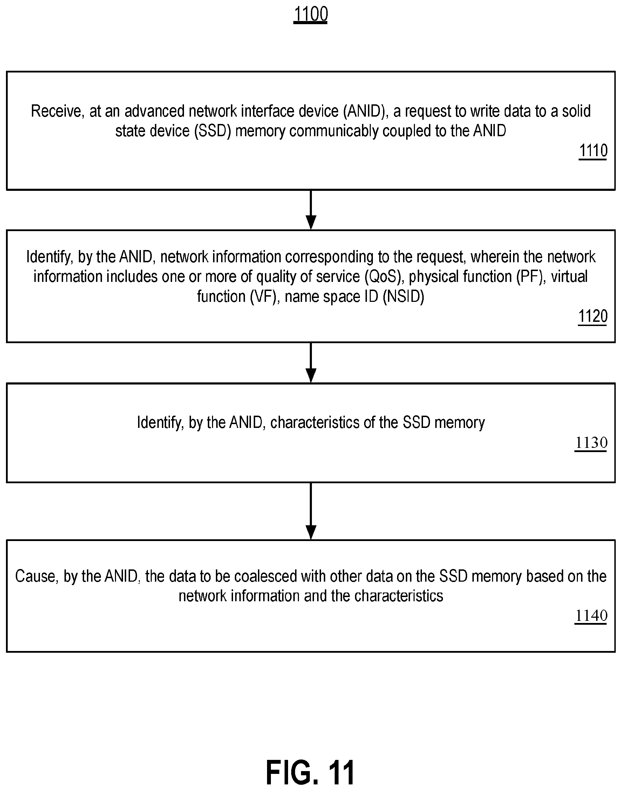

**FIG. 11** is a flow diagram illustrating an embodiment of a method 1100 for providing FDP by an ANID to reduce WAF. Method 1100 may be performed by processing logic that may comprise hardware (e.g., circuitry, dedicated logic, programmable logic, etc.), software (such as instructions run on a processing device), or a combination thereof. The process of method 1100 is illustrated in linear sequences for brevity and clarity in presentation; however, it is contemplated that any number of them can be performed in parallel, asynchronously, or in different orders. Further, for brevity, clarity, and ease of understanding, many of the components and processes described with respect to FIGS. 1-10 may not be repeated or discussed hereafter. In one implementation, an ANID, such as ANID 850 of FIG. 8 and/or ANID 900 of FIG. 9, may perform method 1100.

Method 1100 begins at processing block 1110 where the ANID may receive a request to write data to an SSD memory communicably coupled to the ANID. Then, at block 1120, the ANID may identify network information corresponding to the request. In one implementation, the network information includes one or more of QoS, PF, VF, NSID, SLOs, PASIDs, or flow ID.

Subsequently, at block 1130, the ANID may identify characteristics of the SSD memory. In one implementation, the characteristics include at least a page size of the SSD memory. Lastly, at block 1140, the ANID may cause the data to be coalesced with other data on the SSD memory based on the network information and the characteristics.

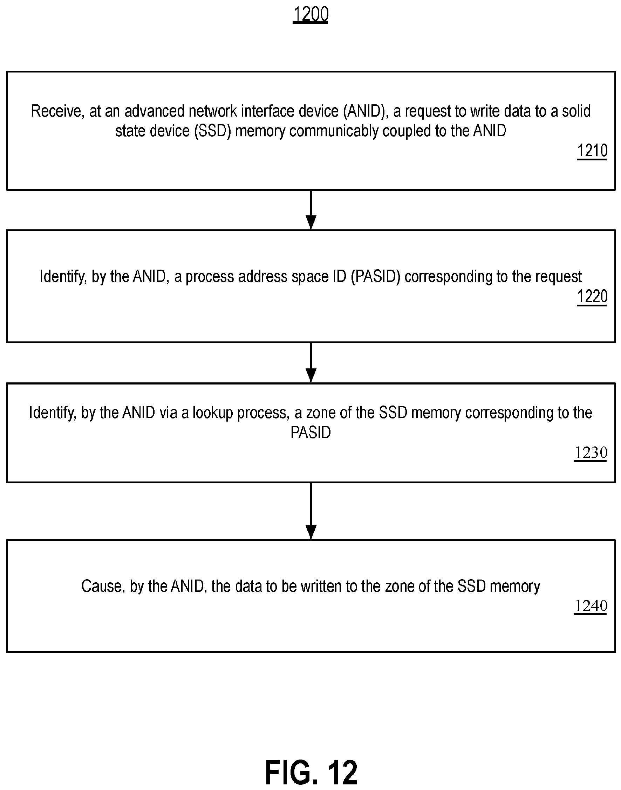

**FIG. 12** is a flow diagram illustrating an embodiment of a method 1200 for supporting ZNS by an ANID to reduce WAF. Method 1200 may be performed by processing logic that may comprise hardware (e.g., circuitry, dedicated logic, programmable logic, etc.), software (such as instructions run on a processing device), or a combination thereof. The process of method 1200 is illustrated in linear sequences for brevity and clarity in presentation; however, it is contemplated that any number of them can be performed in parallel, asynchronously, or in different orders. Further, for brevity, clarity, and ease of understanding, many of the components and processes described with respect to FIGS. 1-11 may not be repeated or discussed hereafter. In one implementation, an ANID, such as ANID 850 of FIG. 8 and/or ANID 900 of FIG. 9, may perform method 1200.

Method 1200 begins at processing block 1210 where the ANID may receive a request to write data to an SSD memory communicably coupled to the ANID. Then, at block 1220, the ANID may identify a process address space ID (PASID) corresponding to the request.

Subsequently, at block 1230, the ANID may identify, via a lookup process, a zone of the SSD memory corresponding to the PASID. Lastly, at block 1240, the ANID may cause the data to be written to the zone of the SSD memory.

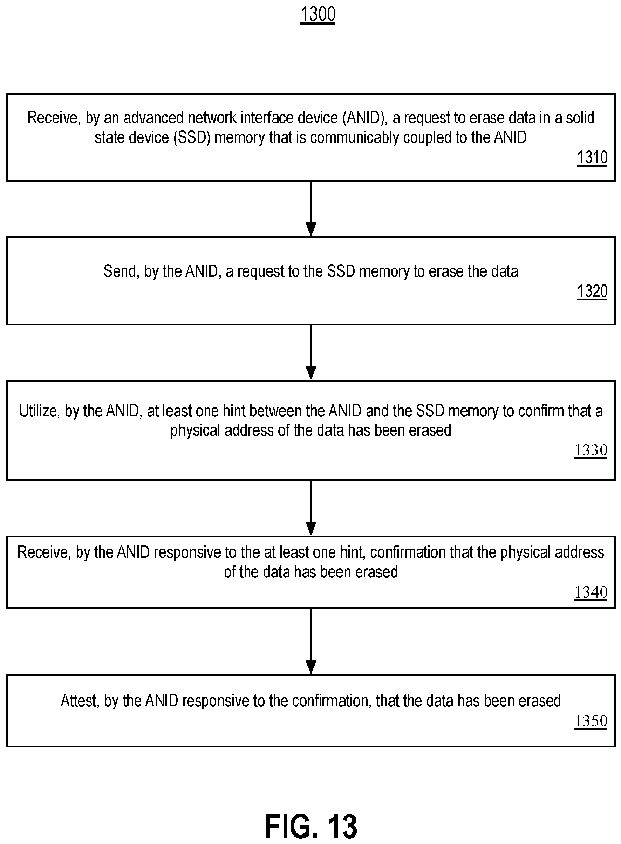

**FIG. 13** is a flow diagram illustrating an embodiment of a method 1300 for providing data erasure attesting by an ANID. Method 1100 may be performed by processing logic that may comprise hardware (e.g., circuitry, dedicated logic, programmable logic, etc.), software (such as instructions run on a processing device), or a combination thereof. The process of method 1300 is illustrated in linear sequences for brevity and clarity in presentation; however, it is contemplated that any number of them can be performed in parallel, asynchronously, or in different orders. Further, for brevity, clarity, and ease of understanding, many of the components and processes described with respect to FIGS. 1-12 may not be repeated or discussed hereafter. In one implementation, an ANID, such as ANID 850 of FIG. 8 and/or ANID 900 of FIG. 9, may perform method 1300.

Method 1300 begins at processing block 1310 where the ANID may receive a request to erase data in an SSD memory that is communicably coupled to the ANID. Then, at block 1320, the ANID may send a request to the SSD memory to erase the data. At block 1330, the ANID may utilize at least one hint between the ANID and the SSD memory to confirm that a physical address of the data has been erased.

Subsequently, at block 1340, the ANID may receive, responsive to the at least one hint, confirmation that the physical address of the data has been erased. Lastly, at block 1350, the ANID may, responsive to the confirmation attest that the data has been erased.

The following examples pertain to further embodiments. Example 1 is an apparatus to facilitate network interface device-based memory access to reduce WAF and provide attestation. The apparatus of Example 1 includes an network interface device comprising one or more processors to implement network interface device functionality and one or more communication protocol engine intellectual property (IP), wherein the network interface device is to: receive a request to write data to a memory node communicably coupled to the network interface device; identify network information corresponding to the request, wherein the network information includes at least one of quality of service (QoS), physical function (PF), virtual function (VF), name space identifier (NSID), flow ID, service level objectives (SLOs), or process address space ID (PASID); identify characteristics of the memory node, wherein the characteristics include at least page size of the memory node; and cause the data to be coalesced with other data directed to the memory node based on the network information and the characteristics.

In Example 2, the subject matter of Example 1 can optionally include wherein the network interface device to cause the data to be coalesced further comprises the network interface device to provide write hints for media placement to the memory node. In Example 3, the subject matter of any one of Examples 1-2 can optionally include wherein the network interface device is to provide a name space for use when coalescing the data. In Example 4, the subject matter of any one of Examples 1-3 can optionally include wherein the memory node comprises at least a solid state device (SSD) memory that comprises a Flash memory, and wherein the network interface device is to support standard Flash device features of the Flash memory.

In Example 5, the subject matter of any one of Examples 1-4 can optionally include wherein the network interface device is further to coalesce the data for a same at least one of bank, sector, or address of the Flash memory. In Example 6, the subject matter of any one of Examples 1-5 can optionally include wherein the network interface device is further to provide at least one of RAID or XOR scrambling for the memory node. In Example 7, the subject matter of any one of Examples 1-6 can optionally include wherein the network interface device is further to create a media alignment for the data, and wherein the network interface device is further to enable an erase on media boundaries of the memory node.

In Example 8, the subject matter of any one of Examples 1-7 can optionally include wherein the network interface device is further to provide at least one of cryptographic services, compression-related services, storage security service, or access control. In Example 9, the subject matter of any one of Examples 1-8 can optionally include wherein the network interface device is further to perform garbage collection across the memory node communicably coupled to the network interface device. In Example 10, the subject matter of any one of Examples 1-9 can optionally include wherein an application programming interface (API) is provided to at least one of query whether a flexible data placement (FDP) functionality of the network interface device that is to cause the data to be coalesced is implemented on the network interface device or enable/disable the FDP functionality on the network interface device.

Example 11 is a method for facilitating network interface device-based memory access to reduce WAF and provide attestation. The method of Example 10 can include receiving, by an network interface device comprising one or more processors to implement network interface device functionality and one or more communication protocol engine intellectual property (IP), a request to write data to a memory node communicably coupled to the network interface device; identifying, by the network interface device, network information corresponding to the request, wherein the network information includes at least one of quality of service (QoS), physical function (PF), virtual function (VF), name space identifier (NSID), flow ID, service level objectives (SLOs), or process address space ID (PASID); identifying, by the network interface device, characteristics of the memory node, wherein the characteristics include at least page size of the memory node; and causing, by the network interface device, the data to be coalesced with other data on the memory node based on the network information and the characteristics.

In Example 12, the subject matter of Example 11 can optionally include further comprising causing the data to be coalesced further comprises the network interface device to provide write hints for media placement to the memory node. In Example 13, the subject matter of Examples 11-12 can optionally include wherein the memory node comprises at least a solid state device (SSD) memory having a Flash memory, and wherein the network interface device is to support standard Flash device features of the Flash memory.

In Example 14, the subject matter of Examples 11-13 can optionally include further comprising providing at least one of RAID or XOR for the Flash memory. In Example 15, the subject matter of Examples 11-14 can optionally include further comprising creating a media alignment for the data. In Example 16, the subject matter of Examples 11-15 can optionally include further comprising enabling an erase on media boundaries of the memory node.

Example 17 is a non-transitory computer-readable storage medium for facilitating network interface device-based memory access to reduce WAF and provide attestation. The non-transitory computer-readable storage medium of Example 17 having instructions stored thereon, which when executed by one or more processors, cause the one or more processors to perform operations comprising: receiving, by an network interface device comprising the one or more processors to implement network interface device functionality and one or more communication protocol engine intellectual property (IP), a request to write data to a memory node communicably coupled to the network interface device; identifying, by the network interface device, network information corresponding to the request, wherein the network information includes at least one of quality of service (QoS), physical function (PF), virtual function (VF), name space identifier (NSID), flow ID, service level objectives (SLOs), or process address space ID (PASID); identifying, by the network interface device, characteristics of the memory node, wherein the characteristics include at least page size of the memory node; and causing, by the network interface device, the data to be coalesced with other data on the memory node based on the network information and the characteristics.

In Example 18, the subject matter of Example 17 can optionally include wherein the operations further comprise causing the data to be coalesced further comprises the network interface device to provide write hints for media placement to the memory node. In Example 19, the subject matter of Examples 17-18 can optionally include wherein the memory node comprises at least a solid state device (SSD) memory that comprises a Flash memory, and wherein the network interface device is to support standard Flash device features of the Flash memory. In Example 20, the subject matter of Examples 17-19 can optionally include wherein the operations further comprise providing at least one of RAID or XOR scrambling for the Flash memory.

Example 21 is a system for facilitating network interface device-based memory access to reduce WAF and provide attestation. The system of Example 21 can optionally include a cluster of processing units; and a network interface device communicably coupled to the cluster of processing units, wherein the network interface device comprises one or more processors to implement network interface device functionality and one or more communication protocol engine intellectual property (IP), and wherein the network interface device is to: receive a request to write data to a memory node communicably coupled to the network interface device; identify network information corresponding to the request, wherein the network information includes at least one of quality of service (QoS), physical function (PF), virtual function (VF), name space identifier (NSID), flow ID, service level objectives (SLOs), or process address space ID (PASID); identify characteristics of the memory node, wherein the characteristics include at least page size of the memory node; and cause the data to be coalesced with other data directed to the memory node based on the network information and the characteristics.

In Example 22, the subject matter of Example 21 can optionally include wherein the network interface device to cause the data to be coalesced further comprises the network interface device to provide write hints for media placement to the memory node. In Example 23, the subject matter of any one of Examples 21-22 can optionally include wherein the network interface device is to provide a name space for use when coalescing the data. In Example 24, the subject matter of any one of Examples 21-23 can optionally include wherein the memory node comprises at least a solid state device (SSD) memory that comprises a Flash memory, and wherein the network interface device is to support standard Flash device features of the Flash memory.

In Example 25, the subject matter of any one of Examples 21-24 can optionally include wherein the network interface device is further to coalesce the data for a same at least one of bank, sector, or address of the Flash memory. In Example 26, the subject matter of any one of Examples 21-25 can optionally include wherein the network interface device is further to provide at least one of RAID or XOR scrambling for the memory node. In Example 27, the subject matter of any one of Examples 21-26 can optionally include wherein the network interface device is further to create a media alignment for the data, and wherein the network interface device is further to enable an erase on media boundaries of the memory node.

In Example 28, the subject matter of any one of Examples 21-27 can optionally include wherein the network interface device is further to provide at least one of cryptographic services, compression-related services, storage security service, or access control. In Example 29, the subject matter of any one of Examples 21-28 can optionally include wherein the network interface device is further to perform garbage collection across the memory node communicably coupled to the network interface device. In Example 30, the subject matter of any one of Examples 21-29 can optionally include wherein an application programming interface (API) is provided to at least one of query whether a flexible data placement (FDP) functionality of the network interface device that is to cause the data to be coalesced is implemented on the network interface device or enable/disable the FDP functionality on the network interface device.

Example 31 is an apparatus for facilitating network interface device-based memory access to reduce WAF and provide attestation, comprising means for receiving, using a network interface device comprising one or more processors to implement network interface device functionality and one or more communication protocol engine intellectual property (IP), a request to write data to a memory node communicably coupled to the network interface device; means for identifying, using the network interface device, network information corresponding to the request, wherein the network information includes at least one of quality of service (QoS), physical function (PF), virtual function (VF), name space identifier (NSID), flow ID, service level objectives (SLOs), or process address space ID (PASID); means for identifying, using the network interface device, characteristics of the memory node, wherein the characteristics include at least page size of the memory node; and means for causing, using the network interface device, the data to be coalesced with other data on the memory node based on the network information and the characteristics. In Example 32, the subject matter of Example 31 can optionally include the apparatus further configured to perform the method of any one of the Examples 12 to 16.

Example 33 is at least one machine readable medium comprising a plurality of instructions that in response to being executed on a computing device, cause the computing device to carry out a method according to any one of Examples 11 to 16. Example 34 is an apparatus for facilitating network interface device-based memory access to reduce WAF and provide attestation, configured to perform the method of any one of Examples 11 to 16. Example 35 is an apparatus for facilitating network interface device-based memory access to reduce WAF and provide attestation, comprising means for performing the method of any one of Examples 11 to 16. Specifics in the Examples may be used anywhere in one or more embodiments.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

## Claims

1. An apparatus comprising:
a network interface device comprising one or more processors to implement network interface device functionality and one or more communication protocol engine circuitry, wherein the network interface device is to:
receive a request to write data to a memory node communicably coupled to the network interface device;
identify network information corresponding to the request, wherein the network information includes at least one of quality of service (QoS), physical function (PF), virtual function (VF), name space identifier (NSID), flow ID, service level objectives (SLOs), or process address space ID (PASID);
identify characteristics of the memory node, wherein the characteristics include at least page size of the memory node; and
cause the data to be coalesced with other data directed to the memory node based on the network information and the characteristics.

2. The apparatus of claim 1, wherein the network interface device to cause the data to be coalesced further comprises the network interface device to provide write hints for media placement to the memory node.

3. The apparatus of any one of claims 1-2, wherein the network interface device is to provide a name space for use when coalescing the data.

4. The apparatus of any one of claims 1-3, wherein the memory node comprises at least a solid state device (SSD) memory that comprises a Flash memory, wherein the network interface device is to support standard Flash device features of the Flash memory, and wherein the network interface device is further to coalesce the data for a same at least one of bank, sector, or address of the Flash memory.

5. The apparatus of any one of claims 1-4, wherein the network interface device is further to provide at least one of RAID or XOR scrambling for the memory node.

6. The apparatus of any one of claims 1-5, wherein the network interface device is further to create a media alignment for the data, and wherein the network interface device is further to enable an erase on media boundaries of the memory node.

7. The apparatus of any one of claims 1-6, wherein the network interface device is further to provide at least one of cryptographic services, compression-related services, storage security service, or access control, and wherein the network interface device is further to perform garbage collection across the memory node communicably coupled to the network interface device.

8. The apparatus of any one of claims 1-7, wherein an application programming interface (API) is provided to at least one of query whether a flexible data placement (FDP) functionality of the network interface device that is to cause the data to be coalesced is implemented on the network interface device or enable/disable the FDP functionality on the network interface device.

9. A method comprising:
receiving, by a network interface device comprising one or more processors to implement network interface device functionality and one or more communication protocol engine circuitry, a request to write data to a memory node communicably coupled to the network interface device;
identifying, by the network interface device, network information corresponding to the request, wherein the network information includes at least one of quality of service (QoS), physical function (PF), virtual function (VF), name space identifier (NSID), flow ID, service level objectives (SLOs), or process address space ID (PASID);
identifying, by the network interface device, characteristics of the memory node, wherein the characteristics include at least page size of the memory node; and
causing, by the network interface device, the data to be coalesced with other data on the memory node based on the network information and the characteristics.

10. The method of claim 9, further comprising causing the data to be coalesced further comprises the network interface device to provide write hints for media placement to the memory node.

11. The method of any one of claims 9-10, wherein the memory node comprises at least a solid state device (SSD) memory having a Flash memory, and wherein the network interface device is to support standard Flash device features of the Flash memory, and further comprising providing at least one of RAID or XOR scrambling for the memory node.

12. The method of any one of claims 9-11, further comprising creating a media alignment for the data.

13. At least one machine readable medium comprising a plurality of instructions that in response to being executed on a computing device, cause the computing device to carry out a method according to any one of claims 9-12.

14. An apparatus for facilitating network interface device-based memory access to reduce WAF and provide attestation, configured to perform the method of any one of claims 9-12.

15. An apparatus for facilitating network interface device-based memory access to reduce WAF and provide attestation, comprising means for performing the method of any one of claims 9-12.
